Europäisches Patentamt

(19) European Patent Office

Office européen des brevets

(11) EP 0 798 558 A2

(12) EUROPEAN PATENT APPLICATION

(43) Date of publication:
01.10.1997 Bulletin 1997/40

(51) Int. Cl.⁶: G01N 30/32

(21) Application number: 97105308.7

(22) Date of filing: 27.03.1997

(84) Designated Contracting States:
DE FR GB

(30) Priority: 29.03.1996 JP 104283/96

(71) Applicant: SHIMADZU CORPORATION
Kyoto 604 (JP)

(72) Inventors:
• Maruyama, Shuzo
Nishinokyo, Nakagyo-ku, Kyoto 604 (JP)
• Kaito, Katsuaki
Nishinokyo, Nakagyo-ku, Kyoto 604 (JP)

(74) Representative: WILHELMS, KILIAN & PARTNER
Patentanwälte
Eduard-Schmid-Strasse 2
81541 München (DE)

(54) Plunger pump for a high performance liquid chromatograph

(57) A plunger pump according to the present invention includes: a pulse motor for driving a plunger of the plunger pump; a position sensor for detecting the position of the plunger and for generating a position signal corresponding to the position detected; and a reference position detector for detecting the reference position of the pulse motor at which the plunger is at the dead center (the outermost dead center or the innermost dead center) based on a plurality of the position signals from the position sensor. While, in the adjusting operation, the plunger of the plunger pump is moved by the pulse motor, the position sensor sends a series of position signals to the reference position detector. Based on the position signals, especially those around a turning point of the movement of the plunger, the reference position detector detects the exact position of the dead center of the plunger pump, and determines it as the reference position of the pulse motor. In a subsequent HPLC analysis using the plunger pump, the rotational position and speed of the pulse motor are controlled based on the reference position thus determined. The reference position may be further used in various aspects of analysis: in a low pressure gradient elusion, for example, the valves are controlled according to the timing based on the reference position of the pulse motor.

Fig. 5

ANGULAR POSITION OF THE PULSE MOTOR

EP 0 798 558 A2

## Description

The present invention relates to a plunger pump for a high performance liquid chromatograph (HPLC).

BACKGROUND OF THE INVENTION

When a high performance liquid chromatography (HPLC) is conducted, it is important to supply the mobile phase, or solvent, to the column precisely and constantly. Accordingly, a plunger pump is used in HPLCs because the plunger pump is better at controlling a flow more precisely. When a higher stability in the flow rate is required, two or more plunger pumps are used in combination to cancel pulsations in the output of each plunger pump. When, on the other hand, a high stability is not required, a damper is provided after a plunger pump to absorb pulsations. In this case, the profile of the cam of the plunger pump is designed so that the suction cycle is set shorter while the discharge cycle is set longer in order to minimize the pulsations in the discharged solvent.

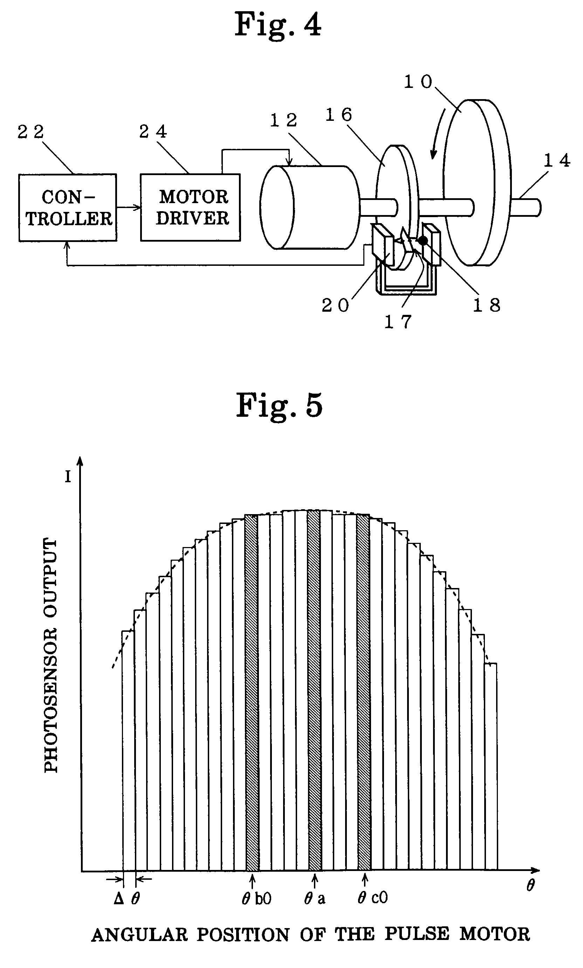

When a precise control of a plunger pump is desired, it is necessary to determine the dead centers of the plunger (i.e., the point at which the plunger is outermost from the cylinder and the point at which the plunger is innermost in the cylinder) precisely. A method of determining the dead centers of a conventional plunger pump is explained referring to Fig. 4.

The cam 10 of a plunger pump is fixed on the shaft 14 of a pulse motor 12, and a photo-interrupter 16 is also fixed on the motor shaft 14. A notch 17 is formed in a periphery of the photo-interrupter 16, and an arrangement of a photo-emitter 18 and a photo-receiver 20 are fixed beside the photo-interrupter 16 so that the notch 17 comes between them. The photo-emitter 18, photo-receiver 20 and the photo-interrupter 16 constitute a photo-sensor which sends a rotation signal to a controller 22 once in a rotation of the photo-interrupter 16, or once in a rotation of the cam 10. Based on the signal from the photosensor, the controller 22 knows the position of the pulse motor 12 and the plunger, and gives a motor control signal to a motor driver 24. Responsive to the motor control signal, the motor driver 24 drives the pulse motor 12 according to the position and speed indicated by the motor control signal.

Generally, in the above construction, the position of the notch 17 in the photo-interrupter 16 and a dead center of the plunger can not be coincided precisely. The controller 22 therefore determines a reference angular position of the pulse motor 12 (where the plunger is at a dead center) by the position at the time when a preset number of pulses come since the signal from the photosensor came.

The number of the pulses for determining the reference angular position must be predetermined beforehand in the final adjusting stage of manufacturing. Such an adjusting operation for determining the number of pulses is also necessary in performing maintenance of the plunger pump when the cam is replaced with a new one. Such an adjustment requires a considerable amount of labor and time so that efficiency of the manufacturing and the maintenance of the plunger pump is greatly reduced.

As described above, there is no means to directly detect that the plunger is at a dead center in the conventional plunger pumps. Some error is thus inevitable when setting the plunger at a dead center, which inherently leads to an error in determining the reference angular position of the pulse motor 12. When a low pressure gradient elusion, for example, is conducted based on the reference angular position including such an error, the concentration of the solvent is not properly controlled and therefore the analysis suffers with low precision.

SUMMARY OF THE INVENTION

An object of the present invention is, therefore, to provide a plunger pump suitably used for an HPLC which can detect a dead center precisely without laborious or time-consuming adjusting operations.

A plunger pump according to the present invention includes:

a pulse motor for driving a plunger of the plunger pump;
a position sensor for detecting a position of the plunger and for generating a position signal corresponding to the position detected; and
a reference position detector for detecting a reference position of the pulse motor at which the plunger is at a dead center based on a plurality of the position signals from the position sensor.

While, in the adjusting operation, the plunger of the plunger pump is moved by the pulse motor, the position sensor sends a series of position signals to the reference position detector. Based on the position signals, especially those around a turning point of the movement of the plunger, the reference position detector detects the exact position of a dead center (the outermost dead center or the innermost dead center) of the plunger pump, and determines it as the reference position of the pulse motor. In a subsequent HPLC analysis using the plunger pump, the rotational position and speed of the pulse motor are controlled based on the reference position thus determined. The reference position may be further used in various aspects of analysis: in a low pressure gradient elusion, for example, the valves are controlled according to the timing based on the reference position of the pulse motor.

An example of the position sensor is a reflector linked to the plunger of the plunger pump (i.e., moves with the plunger), and a reflection type photosensor composed of a photo-emitter and a photo-receiver linked to the case or the body of the plunger pump. As the plunger moves, the amount of light reflected by the reflector and received by the photo-receiver changes according to the movement of the plunger. The photo-sensor thus generates a position signal representing the position of the plunger. Another example is a magnet linked to the plunger and a magnetic field sensor linked to the body of the plunger pump.

The reference position detector can be constituted by a microcomputer and a program turning on the microcomputer. The content of the program will be shown later in the description of the embodiment.

According to the present invention, the dead center of the plunger pump can be detected more precisely than conventional ones. When the present invention is applied to a double plunger pump, the working timings of the two plunger pumps are controlled more precisely and the pulsation in the discharged solvent is further decreased. When the plunger pump of the present invention is used in a low pressure gradient elusion, the timings of the valve control become more exact and the solvents are mixed precisely as scheduled.

Since the reference position is determined automatically by the reference position detector, the adjusting operation becomes very easy and can be done in a shorter period of time. This reduces the manufacturing cost of the plunger pumps, and a greatly facilitates the maintenance of the plunger pumps.

BRIEF DESCRIPTION OF THE DRAWINGS

Fig. 1 is a longitudinal cross-sectional view of a plunger pump embodying the present invention.

Fig. 2 is a perspective view of the photosensor and the reflector at the outside of the case of the plunger pump.

Fig. 3 is a block diagram of the plunger position detecting section of the plunger pump.

Fig. 4 is a block diagram of a conventional plunger driving system of a plunger pump.

Fig. 5 is a graph showing the response results around the peak-top of the output signal from the photosensor.

DETAILED DESCRIPTION OF A PREFERRED EMBODIMENT

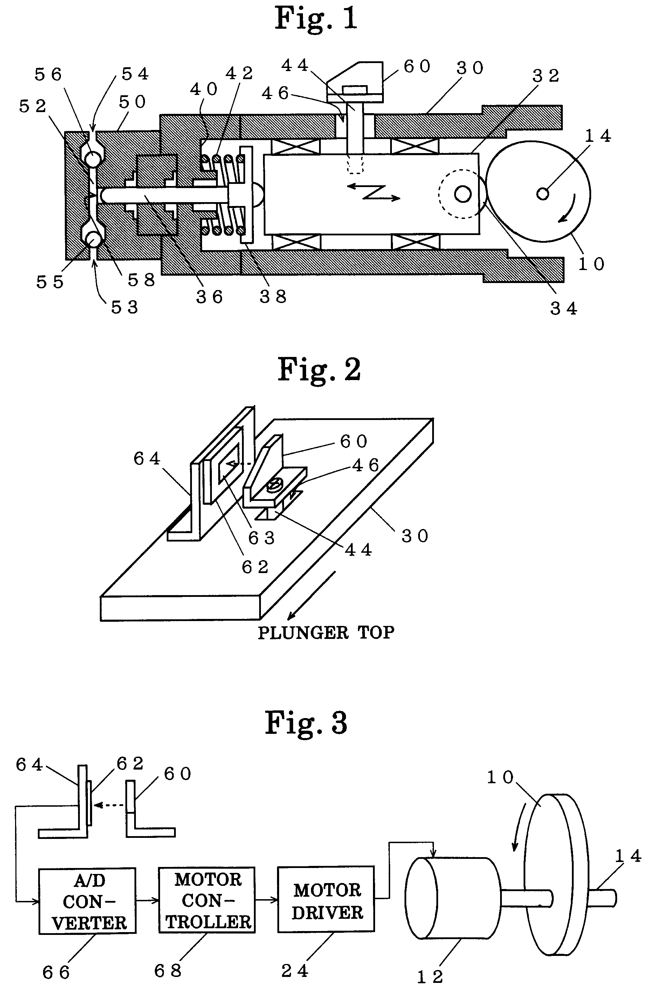

A plunger pump embodying the present invention is described referring to Fig. 1. The plunger pump is comprised of a plunger driving section, a pump block and a plunger position detecting section.

The plunger driving section is provided in a case 30, in which a cam 10 fixed on a motor shaft 14, a crosshead 32 equipped with a cam follower 34, and a plunger 36 with a plunger head 38 are included. Between the plunger head 38 and an end wall 40 of the case 30 is provided a spring 42. A pin 44 is inserted into a side face of the crosshead 32 and passes through an opening 46 of the case 30 to prevent it from rotating. The opening 46 is formed lengthy in the axial direction of the case 30 to allow movement of the crosshead 32 in that direction.

The pump block 50 is attached at the end of the case 30 that the plunger 36 penetrates. Inside of the pump block 50 is comprised of a formed inlet 53, a flow path 52, a cylinder 58, and an outlet 54. The plunger 36 penetrating from the case 30 is inserted in the cylinder 58, and the cylinder 58 joins the flow path 52 at the other end. A pair of check valves 55 and 56 are provided between inlet 53 and the joint, and between the joint and the outlet 54, respectively.

The plunger position detecting section is illustrated in Figs. 2 and 3. A reflector 60 is fixed to the pin 44 extruding from the opening 46 of the case 30, and a support 64 is fixed on the outer wall of the case 30 on which a reflection type photosensor 62 is fixed at the same level as the reflector 60. The width of the receiving section 63 of the photosensor 62 is about 2-3 mm. The photosensor 62 is fixed at such a position that the light generated by the photosensor 62 is reflected by the reflector 60 at the outermost dead center of the plunger 36 and comes back to the photosensor 62. Around that position of the plunger 36 (or of the crosshead 32), the amount of light reflected from the reflector 60 changes with the corresponding movement of the crosshead 32 or the plunger 36.

As shown in Fig. 2, a corner of the reflector 60 is cut off obliquely to enhance the change in the amount of light received by the photosensor 62 in response to the movement of the reflector 60 (or the plunger 36).

Besides the photosensor 62 and the reflector 60, the plunger position detecting section includes an A/D converter 66, motor controller 68 and a motor driver 24, as shown in Fig. 3.

The adjusting operation on the pump as described above is now explained. The motor controller 68 first gives a procession command to the motor driver 24, which sends a preset number of pulses to the pulse motor 12. According to the number of pulses, the angular position $\theta$ of the pulse motor 12 rotates by a small preset value $\Delta\theta$. Meanwhile the photosensor 62 generates a signal corresponding to the amount of light received from the reflector 60. The signal is converted into digital data by the A/D converter 66, which is given to the motor controller 68 and is stored in a memory provided within the motor controller 68. The motor controller 68 then gives another procession command to the motor driver 24 and further rotates the pulse motor 12 by the small preset value $\Delta\theta$, by which another set of digital data is stored in the memory.

After repeating the process until the pulse motor 12 rotates by one turn, the motor controller 68 reads out the data compiled in the memory and selects a preset amount of data associated with the maximum output signal of the photosensor 62. Based on the selected data and according to a preset procedure, the motor controller 68 detects the outermost dead center of the plunger 36. The angular position of the pulse motor 12 at the detected outermost dead center is determined as the reference angular position described above, and is stored in a non-volatile memory.

The speed/position control of the pulse motor 12, the control of the pump and the control of the HPLC (e.g., the timing control of valves for a log pressure gradient elusion) are based on the timing counted from the time point at which the angular position of the pulse motor 12 passes the reference angular position.

The resolution of the A/D converter 66 should be determined appropriately according to the required preciseness of the determination of the dead center of the plunger 36. The small preset value $\Delta\theta$ for the stepwise procession of the pulse motor 12 should be determined according to the resolution of the A/D converter 66. It is highly recommended that the value of $\Delta\theta$ be determined so that the change in the output signal of the photosensor is smaller than the resolution of the A/D converter 66 around the peak-top of the outermost dead center of the plunger and therefore there is no change in the converted digital data around the peak-top.

An example of determining the dead center of the plunger 36 described above is detailed here referring to Fig. 5. Suppose in this case that the cam profile around the outermost dead center is composed of continuous curves of the second order. The curves are asymmetrical before and after the dead center, and the change rate of the curve after the dead center is C0 compared to that after the dead center 1.

Fig. 5 shows the detail about the peak-top of the curve of change in the A/D converted data representing the output signal $I(\theta)$. An angular position $\theta_{b0}$ is defined as the minimum among the three consecutive data whose values $I(\theta)$ do not increase. The angular position $\theta_{b0}$ is referred to as the beginning of the flat region. Another angular position $\theta_{c0}$ is defined as the minimum among the three data whose values $I(\theta)$ decrease consecutively. The angular position $\theta_{c0}$ is referred to as the end of the flat region. The reference angular position $\theta_a$ corresponding to the outermost dead center of the plunger 36 exists between the angular positions $\theta_{b0}$ and $\theta_{c0}$.

An example of the procedure that the motor controller 68 determines the reference angular position $\theta_a$ is as follows. After determining the angular positions $\theta_{b0}$ and $\theta_{c0}$ as above, the larger one (or no smaller one) is defined as Imax. Using the angular positions $\theta_{b0}$ and n angular positions $\theta_{b1}$ to $\theta_{bn}$ preceding $\theta_{b0}$, a series of values $y_{bi}$ are calculated as

$$y_{bi} = \text{Imax} - I(\theta_{bi}) \ (i = 0, 1, ..., n)$$

and are stored in the memory. The angular positions $\theta_{bi}$ can be calculated as, for example,

$$\theta_{bi} = \theta_{b0} - 4 \times i \times \Delta\theta \ (i = 0, 1, ..., n)$$

and the number n may be 5, for example. Similarly, using the angular position $\theta_{c0}$ and the following n angular positions $\theta_{c1}$ to $\theta_{cn}$, another series of values $y_{ci}$ are calculated as

$$y_{ci} = (\text{Imax} - I(\theta_{ci}))/C0 \ (i = 0, 1, ..., n)$$

and are stored in the memory. The angular positions $\theta_{ci}$ are calculated corresponding to above $\theta_{bi}$ as

$$\theta_{ci} = \theta_{c0} + 4 \times i \times \Delta\theta \ (i = 0, 1, ..., n).$$

Using the two sets of $2 \times (n + 1)$ pieces of data $(y, \theta)$, the coefficients C1, C2 and C3 in the formula

$$y = C1 + C2 \times \theta + C3 \times \theta^2$$

are calculated by the least squares method. The reference angular position $\theta_a$ is then calculated as

$$\theta_a = -C2/(2 \times C3).$$

Though, in the above example, the cam profile is supposed to be composed of continuous curves of the second order, it is also possible to determined the reference angular position $\theta_a$ by the above method if the cam profile is composed of curves of the same kind and same order around the outermost dead center.

**Claims**

1. A plunger pump for a liquid chromatograph comprising:

   a pulse motor for driving a plunger of the plunger pump;
   a position sensor for detecting a position of the plunger and for generating a position signal corresponding to the position detected; and
   reference position detecting means for detecting a reference position of the pulse motor at which the plunger is at a dead center based on a plurality of the position signals from the position sensor.

2. The plunger pump according to claim 1, wherein:

   the position sensor generates an analog position signal corresponding to the position detected;
   an A/D converter is provided between the position sensor and the reference position detecting means for converting the analog position signal into a digital position data; and
   the reference position detecting means detect the reference position based on a plurality of the position data obtained while the plunger moves across the dead center.

3. The plunger pump according to claim 2, wherein the position sensor comprises:

   a reflector linked to the plunger; and
   a photosensor for emitting a light, for receiving the light reflected by the reflector, and for generating the analog position signal corresponding to the amount of light received.

4. The plunger pump according to claim 3, wherein a part of the reflector is cut off obliquely to enhance the change in the amount of light received by the photosensor responsive to the movement of the plunger.

5. The plunger pump according to claim 2, wherein the reference position detecting means detects the reference position by steps of:

selecting a series of position data around the dead center;
constructing a curve of the same kind as a curve of a cam profile of a cam of the plunger pump for pushing the plunger based on the selected position data; and
determining the reference position as the maximum or minimum point of the constructed curve.

6. The plunger pump according to claim 5, wherein the resolution of the A/D converter is set so that values of a plurality of position data are the same around the dead center.

# Fig. 1

# Fig. 2

PLUNGER TOP

# Fig. 3

| A/D CON- VERTER | MOTOR CON- TROLLER | MOTOR DRIVER |
|---|---|---|

# Fig. 4

# Fig. 5

ANGULAR POSITION OF THE PULSE MOTOR